Europäisches Patentamt

European Patent Office

Office européen des brevets

(19)

(11) **EP 0 713 984 B1**

(12) **EUROPÄISCHE PATENTSCHRIFT**

(45) Veröffentlichungstag und Bekanntmachung des Hinweises auf die Patenterteilung:
**13.01.1999 Patentblatt 1999/02**

(51) Int Cl.⁶: **F16H 61/00**, F16H 61/02

(21) Anmeldenummer: **95115535.7**

(22) Anmeldetag: **02.10.1995**

(54) **Verfahren zur Bestimmung der Schaltzeit für einen Übersetzungswechsel in einem stufenlosen Getriebe**

Method of determining the shift time for a ratio change in a continuously variable transmission

Méthode pour déterminer le temps de changement de rapport d'une transmission à variation continue

(84) Benannte Vertragsstaaten:
**DE FR GB IT**

(30) Priorität: **24.11.1994 DE 4441876**

(43) Veröffentlichungstag der Anmeldung:
**29.05.1996 Patentblatt 1996/22**

(73) Patentinhaber: **Dr.Ing.h.c. F. Porsche Aktiengesellschaft**
**70435 Stuttgart (DE)**

(72) Erfinder:
- **Petersmann, Joseph**
  **D-71299 Wimsheim (DE)**
- **Lardy, Patrick**
  **D-71263 Weil der Stadt (DE)**

(56) Entgegenhaltungen:
**DE-C- 4 120 540**      **US-A- 5 058 014**

**Beschreibung**

Die Erfindung betrifft ein Verfahren zur Bestimmung der Schaltzeit für einen Übersetzungswechsel in einem stufenlosen Getriebe nach dem Oberbegriff des Patentanspruches 1.

Aus der DE 41 20 540 C 1 ist es bekannt, ein stufenloses Getriebe so anzusteuern, daß ein vom Fahrer direkt beeinflußbares Stufengetriebe nachgebildet ist. Hierzu stellt ein Steuergerät an dem stufenlosen Getriebe die Druckverhältnisse so ein, daß eine im Steuergerät ermittelte Soll-Übersetzung uesoll am Getriebe eingestellt wird. Die Soll-Übersetzung uesoll wird innerhalb des Steuergerätes abhängig von einem Schaltwunsch des Fahrers ermittelt. Eine in dieser Weise angeforderte Änderung der Soll-Übersetzung kann nicht sprungartig erfolgen, sondern wird mit Rücksicht auf die Belastung des Getriebes und insbesondere, um einen für den Fahrer angenehmen Schaltkomfort zu erzeugen, über eine vorgegebene Schaltzeit durchgeführt.

In PKW verwendete automatisch geschaltete Stufengetriebe sind in der Regel aus zu Planetensätzen angeordneten Zahnrädern aufgebaut, bei denen durch Druck beaufschlagte Kupplungen und Bremsen vorbestimmte Übersetzungen geschaltet werden können. Auch hier kann der Übersetzungswechsel, d.h. zum einen der Druckabbau bei den im alten Übersetzungsverhältnis betätigten Kupplungen und Bremsen und zum anderen der Druckaufbau bei den im zukünftigen Gang betätigten Kupplungen und Bremsen nicht schlagartig erfolgen, sondern muß aus technischen sowie komfortbedingten Gründen über eine vorgegebene Schaltzeit durchgeführt werden.

Der Erfindung liegt das Problem zugrunde, eine derartige Schaltzeit so zu bestimmen, daß der Schaltkomfort den Komfortempfinden eines Fahrers angepaßt ist.

Zur Lösung dieses Problemes sind nach der Erfindung die in Anspruch 1 beschriebenen Schritte vorgesehen. Hiermit sind in vorteilhafter Weise alle Einflußgrößen berücksichtigt, die auf einen Übersetzungswechsel wesentlichen Einfluß haben. Mit den angegebenen Schritten ist vor allem berücksichtigt, daß die Lage der Schaltung (Ausgangsübersetzung und Zielübersetzung, z.B. Schaltung von der 4. Übersetzung zur 5. Übersetzung) sowie die Richtung der Schaltung (Schaltung von der 4. Übersetzung zur 5. Übersetzung im Unterschied zur Schaltung von der 5. Übersetzung zur 4. Übersetzung) einen wesentlichen Einfluß auf den Schaltkomfort haben. Dieser Einfluß ist damit berücksichtigt, daß eine Schaltgrundzeit für jede Schaltung und für jede Schaltrichtung gesondert bestimmt.

Mit dem Drehzahlfaktor ist dann die durch den Übersetzungswechsel hervorgerufene Änderung der Eingangsdrehzahl des Getriebes berücksichtigt. Da diese Drehzahländerung auf die drehenden Massen sowohl der Eingangsseite des Getriebes als auch einer dem Getriebe vorgeschalteten Antriebsmaschine wirkt, ist hiermit der Anteil des aus der Änderung der Rotationsenergie dieser Massen herrührende Einfluß auf den Schaltkomfort berücksichtigt. Mit steigender Änderung der Eingangsdrehzahl steigt daher der Drehzahlfaktor und somit auch die Schaltzeit an.

Der Lastfaktor berücksichtigt schließlich die am Getriebeeingang anliegende Last. Bei niedrigen Lasten ist ein weicher, eher unmerklicher Schaltvorgang gewünscht, der vor allem hohen Ansprüchen an den Schaltkomfort gerecht werden soll. Bei hoher Last hingegen steht der Beschleunigungswunsch im Vordergrund, für dessen Erfüllung auch Nutzung der Rotationsenergie möglich ist; Komfortwünsche treten hier in den Hintergrund, so daß auch harte Schaltungen akzeptabel sind. Aus diesem Grund steigt der Lasffaktor und damit die Schaltzeit bei sinkender Last. Je nach Auslegung ist es möglich, daß der Lasffaktor bei sehr hohen Lasten negative Werte erreicht, um so zur Nutzung der Rotationsenergie dem Drehzahlfaktor entgegenzuwirken.

Mit der zur Durchführung des Verfahrens vorgeschlagenen Vorrichtung in Form einer programmierbaren Steuerung ist die Anwendung des Verfahrens in besonders einfacher und kostengünstiger Weise erreichbar.

Vorteilhafte Weiterbildungen der Erfindung sind in den Unteransprüchen beschrieben.

Nach einer Weiterbildung der Erfindung wird die Grundschaltzeit zusätzlich abhängig vom Fahrzustand (Zug oder Schub) bestimmt. Hiermit ist berücksichtigt. daß für einen Fahrer der Schaltkomfort nicht nur durch die Größe und den Verlauf, sondern auch durch die Wirkungsrichtung eines Schaltruckes beeinflußt ist. Dieser Weiterbildung liegt die Erkenntnis zugrunde, daß ein Schaltruck unter Schub als unangenehmer empfunden wird wie ein Schaltruck unter Zug. Dies ist zum einen darauf zurückzuführen, daß der Fahrer durch seinen Sitz bei Zugbetrieb besser abgestützt ist als bei Schubbetrieb. Zum anderen wird beim Beschleunigen, d.h. unter Schub, ein Schaltruck als für die Beschleunigung notwendig oder gar als Zeichen für einen sportlichen Fahrstil akzeptiert, während bei einer Verzögerung unter Schub Schaltrucke eher den Eindruck einer Unterbrechung der Verzögerung hervorrufen und daher als unangenehm empfunden werden.

Die Erfindung ist nachstehend anhand eines in den Zeichnungen dargestellten Ausführungsbeispieles näher erläutert.

Es zeigen:

Fig. 1    eine Übersicht über ein stufenloses Getriebe mit einer Steuerung,

Fig. 2    ein schematisches Blockschaltbild einer Übersetzungssteuerung und

Fig. 3    einen Ablaufplan der Bestimmung einer Schaltzeit.

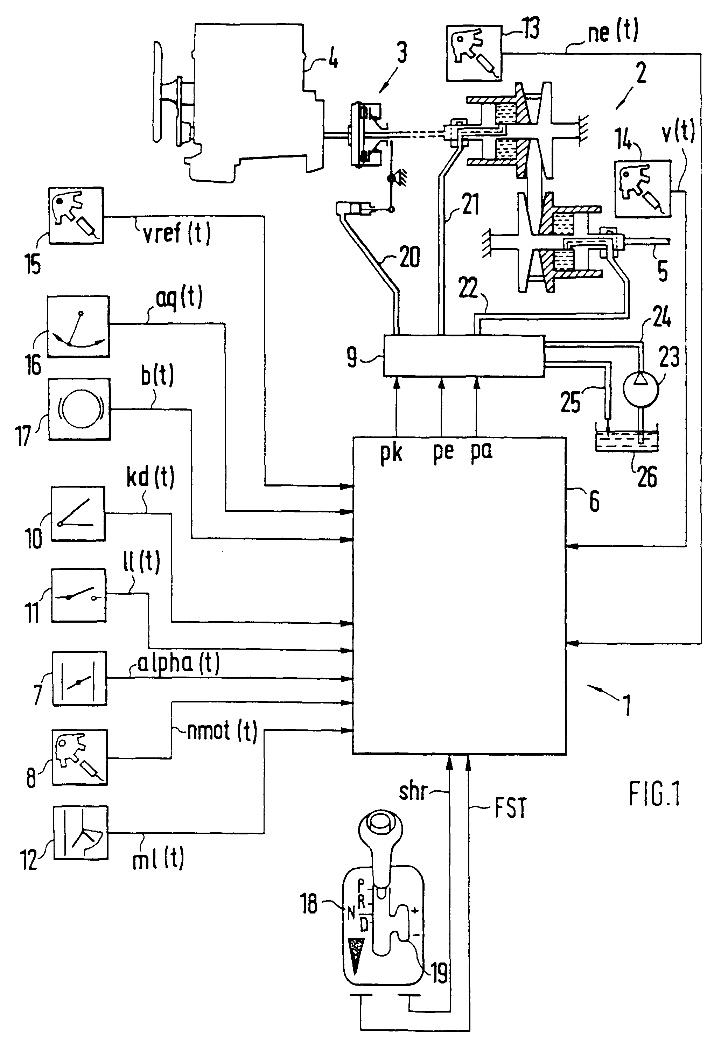

**Fig. 1** zeigt ein Blockschaltbild einer Steuerung 1 eines elektro-hydraulisch betätigten stufenlosen Getriebes 2 am Beispiel eines Umschlingungsgetriebes. Das stufenlose Getriebe 2 wird über eine steuerbare Anfahrkupplung 3 von einer Brennkraftmaschine 4 angetrieben. Eine Abtriebswelle 5 des stufenlosen Getriebes 2 ist mit einem nicht gezeigten Radantrieb eines Kraftfahrzeugs verbunden.

Größen oder Funktionen, die sich mit der Zeit t ändern, sind nachfolgend als Funktionen f(t) der Zeit t dargestellt.

Ein Steuergerät 6 steuert wenigstens in Abhängigkeit von der Drosselklappenstellung alpha(t) eines Drosselklappenwinkelgebers 7 und einer Motordrehzahl nmot(t) eines Motordrehzahlgebers 8 der Brennkraftmaschine 4 einen Hydraulik-Ventilblock 9 an. Zur Steuerung des stufenlosen Getriebes 2 und der Anfahrkupplung 3 erhält das Steuergerät 6 als weitere Eingangsgrößen ein Kick-down-Signal kd(t) eines Kickdown-Schalters 10, ein Leerlaufsignal ll(t) eines Leerlaufschalters 11, eine Luftmenge bzw. Luftmasse ml(t) eines Luftmengen- bzw. Luftmassengebers 12 der Brennkraftmaschine 4 sowie eine Getriebeeingangsdrehzahl ne(t) eines Getriebeeingangsdrehzahlgebers 13 und eine Fahrgeschwindigkeit v(t) eines Fahrgeschwindigkeitgebers 14. Zusätzlich wird vom Steuergerät 6 eine Geschwindigkeit vref(t) eines Referenzgeschwindigkeitgebers 15 an einer nicht angetriebenen Fahrzeugachse, eine Querbeschleunigung aq(t) eines Querbeschleunigungsgebers 16 und ein Bremssignal b(t) eines Bremssignalgebers 17 erfasst und verarbeitet.

Schließlich ist die Steuerung üblicherweise vom Fahrzeugführer über eine Wähleinrichtung 18 zur Vorwahl von Fahrstufen P (Parksperre), R (Rückwärtsgangstufe), N (Leergangsstufe) und D (selbstätige Einstellung des Übersetzungsverhältnisses u.ä. des stufenlosen Getriebes) beeinflußbar; ferner ist ein Einstellbereich der Wähleinrichtung 18 zur direkten Vorgabe des Übersetzungsverhältnisses u.ä. vorgesehen.

Die Wähleinrichtung 18 kann aus der Fahrstufe D in eine zweite Schaltgasse 19 bewegt werden, in der die Wähleinrichtung 18 als Wippschalter arbeitet und der Fahrzeugführer das Übersetzungsverhältnis im Sinne einer Hochschaltung oder einer Rückschaltung beeinflussen kann. Die Wähleinrichtung 18 gibt ein Fahrstufensignal FST und ein Schaltanforderungssignal shr für eine Hochschaltung oder eine Rückschaltung ab.

Hier und im folgenden steht der Begriff "Hochschalten" oder "Verringern der Übersetzung" für eine Übersetzungsänderung, die bei gleichbleibender Eingangsdrehzahl die Ausgangsdrehzahl des Getriebes erhöht, entsprechend einer Hochschaltung bei einem Stufengetriebe. Umgekehrt stehen die Begriffe "Rückschalten" und "Erhöhen der Übersetzung" für eine Übersetzungsänderung im Sinne einer Verringerung der Ausgangsdrehzahl des Getriebes bei gleichbleibender Eingangsdrehzahl, entsprechend einer Rückschaltung bei einem Stufengetriebe.

In Abhängigkeit von den genannten Größen steuert das Steuergerät 6 über einen Signalausgang pk und den Ventilblock 9 den Hydraulikdruck in der Anfahrkupplung 3 sowie über Signalausgänge pe und pa und den Hydraulikventilblock 9 ein Übersetzungsverhältnis ue zwischen der Getriebeeingangsdrehzahl ne(t) und der Getriebeausgangsdrehzahl (Fahrgeschwindigkeit) v(t) an. Der Hydraulikventilblock 9 verbindet hierzu entsprechende Steuerleitungen 20, 21 und 22 der Anfahrkupplung 3 und des stufenlosen Getriebes 2 mit einer an eine Pumpe 23 angeschlossenen Druckleitung 24 oder einer Rücklaufleitung 25 zu einem Vorratsbehälter 26 für Hydraulikflüssigkeit.

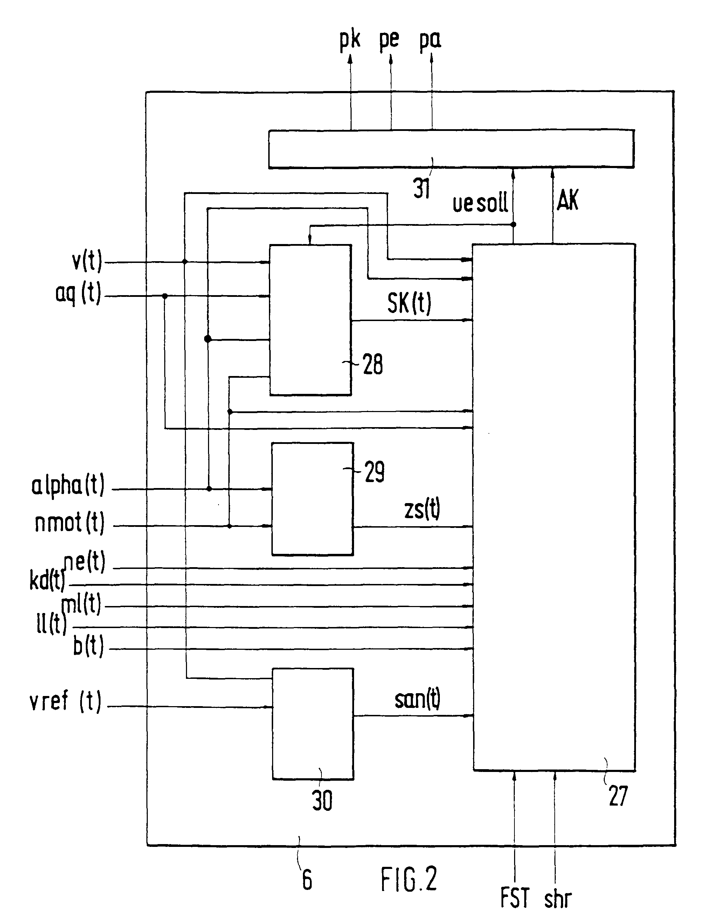

Das Steuergerät 6 umfaßt wie in **Fig. 2** dargestellt eine Übersetzungssteuerung 27, die mit einer Fahraktivitätsermittlungfunktion 28, einer Zug-Schub-Ermittlungsfunktion 29, einer Antriebsschlupfermittlungsfunktion 30 und einer Stellfunktion 31 verbunden ist.

Die Fahraktivitätsermittlungsfunktion 28 bestimmt eine den Fahrstil des Fahrers oder dessen verkehrssituationsbedingtes Handeln im Bezug auf die Steuerung des Kraftfahrzeuges bewertenden Größe Fahraktivität SK(t), vorzugsweise nach einem in der DE-OS 39 22 051 beschriebenen Verfahren.

Die Zug-Schub-Ermittlungsfunktion 29 gibt in Abhängigkeit von der Drosselklappenstellung alpha(t) und der Motordrehzahl nmot(t) ein Signal für Zug- oder Schubbetrieb des Fahrzeuges Zug/Schub zs(t) ab und die Antriebsschlupfermittlungsfunktion 30 ermittelt aus der Differenz von Fahrgeschwindigkeit v(t) und Geschwindigkeit vref(t) einen den Schlupf der angetriebenen Räder repräsentierenden Antriebsschlupf san(t).

Aus diesen Größen, dem Fahrstufensignal FST, dem Schaltanforderungssignal shr, der Drosselklappenstellung alpha(t), dem Kick-down-Signal kd(t), dem Leerlaufsignal ll(t), der Luftmasse ml(t), der Getriebeeingangsdrehzahl ne(t), der Fahrgeschwindigkeit v(t), der Querbeschleunigung aq(t), dem Bremssignal b(t) und der Getriebeausgangsdrehzahl ne(t) ermittelt die Übersetzungssteuerung 27 ein Soll-Übersetzungsverhältnis uesoll sowie ein Signal Anfahrkupplung auf/zu AK, die an die Stellfunktion 31 weitergegeben werden.

Die Stellfunktion 31 steuert mittels der Signalausgänge pe und pa die Übersetzungseinstellung des Getriebes 2, wobei das Soll-Übersetzungsverhältnis uesoll mit geringstmöglicher Verzugszeit, jedoch ohne merkliches Überschwingen eingestellt wird. Darüber hinaus wird die Anfahrkupplung nach Maßgabe des Signales Anfahrkupplung auf/zu AK von der Stellfunktion 31 über den Signalausgang pk gesteuert.

Die Übersetzungssteuerung 27 ermittelt in einer ersten selbsttätig die Übersetzung wählenden Betriebsart aus den Eingangsgrößen Zug/Schub zs(t) Antriebsschlupf san(t), Fahrstufensignal FST, Fahraktivität SK(t), Drosselklappenstellung alpha(t), Motordrehzahl nmot(t), Leerlaufsignal ll(t), Kick-Down-Signal kd(t), Luftmassensignal ml(t), Bremssignal b(t) und Getriebeeingangsdrehzahl ne(t) das Soll-Übersetzungsverhältnis uesoll.

In einer zweiten, vom Fahrer beeinflußten Betriebsart ist ein vom Fahrer direkt beeinflußbares Stufengetriebe nachgebildet. Das Soll-Übersetzungsverhältnis uesoll wird aus den Eingangsgrößen Schaltanforderungssignal shr, Getriebeeingangsdrehzahl ne(t), Drosselklappenstellung alpha(t) und Zug/Schub zs(t) bestimmt.

Die Übersetzungssteuerung 27 enthält eine nicht gezeigte Tabelle, in der voreingestellte Soll-Übersetzungen uesoll_i abgelegt sind. Da jede dieser voreingestellten Sollübersetzungen uesoll_i bei der Nachbildung eines Stufengetriebes einem Gang dieses Stufengetriebes entspricht, sin so viele voreingestellten Sollübersetzungen uesoll_i vorgesehen, wie Gänge eines Stufengetriebes nachgebildet werden sollen. Die voreingestellten Sollübersetzungen uesoll_i können daher auch als Gänge bezeichnet werden.

Im dargestellten Beispiel ist ein 5gängiges Stufengetriebe nachgebildet, so daß für Vorwärtsfahrt die voreingestellten Sollübersetzungen uesol_1, uesoll_2, uesoll_3, uesoll_4 und uesoll_5 in der Tabelle abgelegt sind. Die Bezeichnung der voreingestellten Sollübersetzungen erfolgt nach dem Schema uesoll_i, wobei i für den entsprechenden Gang des Stufengetriebes steht. uesoll_3 steht also für die voreingestellten Sollübersetzungen, die dem 3. Gang des Stufengetriebes entspricht. Während die Gänge von uesoll_1 nach uesoll_5 'höher' werden, verringert sich in dieser Richtung der Wert der voreingestellten Sollübersetzung: die voreingestellte Sollübersetzung ist bei uesoll_1 am höchsten und bei uesoll_5 am niedrigsten.

Um aus einem Schaltanforderungssignal shr einen Wechsel des Übersetzungsverhältnisses ue herbeizuführen, sind folgende Schritte notwendig:

- Bestimmen einer Schaltzeit ts,
- Bestimmen einer Übergangskennlinie.

Mit der Schaltzeit ts und der Übergangskennlinie wird dann der Verlauf des Soll-Übersetzungsverhältnisses uesoll vom alten Wert, bspw. uesoll_4, auf den neuen Wert, bspw. uesoll_5, bestimmt.

Die Schaltzeit ts berechnet sich nach

$$ts = tg(gg) * (1 + DF + LF) \qquad \text{(Gl. 1)}$$

mit einem Drehzahlfaktor DF

$$DF = A(gg) * \frac{Delta\_n}{Delta\_n\_max * 100} \qquad \text{(Gl. 2)}$$

und einem Lastfaktor LF

$$LF = B(gg) * \frac{Md}{Md\_max * 100} \qquad \text{(Gl. 3)}$$

aus folgenden Größen:

gg: Schaltart, beschrieben durch Schaltung und der Schaltrichtung. Beispiel: 12_z bedeutet Schaltung vom ersten Übersetzungsverhältnis uesoll_1 in das zweite Übersetzungsverhältnis uesoll_2 unter Zug; 43_s bedeutet Schaltung vom vierten Übersetzungsverhältnis uesoll_4 in das dritte Soll-Übersetzungsverhältnis uesoll_3 unter Schub.

tg (gg): Grundschaltzeit für die Schaltart gg

A(gg): Drehzahlkoeffizient für die Schaltart gg

B(gg): Lastkoeffizient für die Schaltart gg

Delta_n: vorausberechnete Änderung der Getriebeeingangsdrehzahl ne(t) beim Wechsel des Übersetzungsverhältnisses abhängig von der Schaltung und der Getriebeeingangsdrehzahl ne (t).

Delta_n_max: maximal mögliche Änderung der Getriebeeingangsdrehzahl ne(t) beim vorgesehenen Wechsel des Übersetzungsverhältnisses

Md: Eingangsdrehmoment des Getriebes 2

Md_max: maximales Eingangsdrehmoment des Getriebes 2.

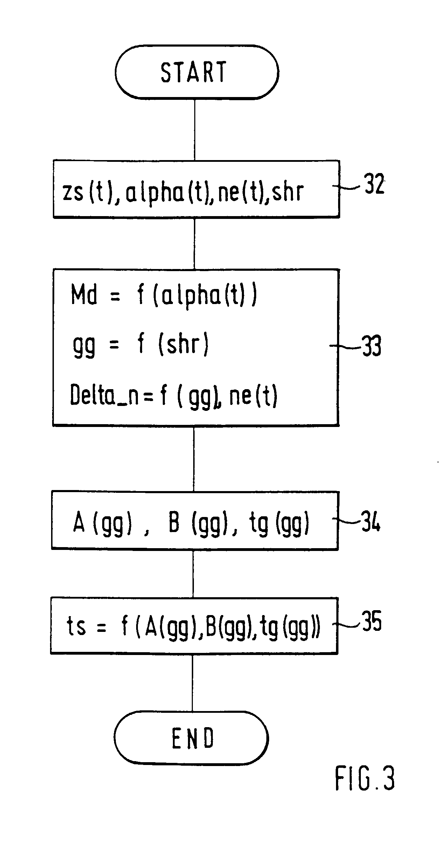

Vor der Berechnung der Schaltzeit ts müssen zunächst die genannten Größen bestimmt werden. Die hierzu notwendigen Schritte sind in Form eines Ablaufplanes in **Fig. 3** dargestellt. In Schritt 32 werden zunächst die primären Eingangsgrößen Zug/Schub zs(t), Drosselklappenstellung alpha(t), Getriebeeingangsdrehzahl ne(t) und Schaltanforderungssignal shr bestimmt. Im nächsten Schritt 33 werden hieraus als sekundäre Größen das Eingangsdrehmoment Md, abhängig von der Drosselklappenstellung alpha(t), die Schaltung gg aus der aktuell eingestellten Übersetzung ue und dem Schaltanforderungssignal shr sowie die Änderung der Getriebeeingangsdrehzahl Delta_n aus der Schaltung gg und der Getriebeeingangsdrehzahl ne(t). Mit diesen sekundären Eingangsgrößen werden in Schritt 34 aus einer Tabelle die Grundschaltzeit tg(gg), der Drehzahlkoeffizient A(gg) und der Lastkoeffizient B (gg) bestimmt. In Schritt 35 schließlich wird nach Gleichung 1 die Schaltzeit ts berechnet.

Mit den nunmehr vorhandenen Werten für das alte Soll-Übersetzungsverhältnis uesoll1, das neue Soll-Übersetzungsverhältnis uesoll2 und die Schaltzeit ts kann nun im zweiten Schritt mit Hilfe der Übergangskennlinie der zeitliche Verlauf des Soll-Übersetzungsverhältnisses uesoll bestimmt und über die Stellfunktion 31 und den Ventilblock 9 am Getriebe 2 eingestellt werden.

Das im vorstehenden Ausführungsbeispiel beschriebene Verfahren ist vorzugsweise in Form eines Programmes in einer mit einem Mikrocomputer versehenen programmierbaren Steuerung realisiert. Das Programm kann die Zuordnung zweier Größen (beispielsweise die Zuordnung der Drosselklappenstellung alpha(t) zu einem Eingangsdrehmoment Md(t)) in Form von Tabellen oder durch einen funktionalen Zusammenhang darstellen.

**Patentansprüche**

1. Verfahren zur Bestimmung der Schaltzeit (ts) für einen Wechsel des Übersetzungsverhältnisses (ue) in einem stufenlosen Getriebe (2), mit dem ein gestuftes Getriebe nachgebildet ist, **gekennzeichnet** durch folgende Schritte:

   - Bestimmen einer Grundschaltzeit (tg) abhängig von dem Wechsel des Übersetzungsverhältnisses und der Schaltrichtung (gg);
   - Bestimmen eines Drehzahlfaktors abhängig von der beim Wechsel des Übersetzungsverhältnisses entstehenden Änderung der Eingangsdrehzahl (ne(t)) des Getriebes (2);
   - Bestimmen eines Lastfaktors abhängig von einem Lastsignal (Alpha(t)) des Getriebes (2);
   - Bestimmen der Schaltzeit (ts) aus der Grundschaltzeit (tg), dem Lastfaktor und dem Drehzahlfaktor.

2. Verfahren nach Anspruch 1, **dadurch gekennzeichnet**, daß die Grundschaltzeit (tg) zusätzlich abhängig vom Fahrzustand (Zug/Schub (zs(t)) ) bestimmt wird.

3. Verfahren nach Anspruch 2, **dadurch gekennzeichnet**, daß die Grundschaltzeit (tg) beim Fahrzustand Zug kleiner als beim Fahrzustand Schub gewählt wird.

4. Vorrichtung zur Durchführung des Verfahrens nach einem der Ansprüche 1 bis 3, **dadurch gekennzeichnet**, daß ein programmierbares Steuergerät mit einem das Verfahren darstellenden Programm versehen ist.

5. Vorrichtung nach Anspruch 4, **dadurch gekennzeichne**t, daß das Programm für die Zuordnung zweier Größen zueinander Tabellen verwendet.

6. Vorrichtung nach Anspruch 4, **dadurch gekennzeichnet**, daß das Programm für die Zuordnung zweier Größen zueinander funktionelle Zusammenhänge verwendet.

**Claims**

1. A method for determining the gear-change time (ts) for changing the gear ratio (ue) in a continuously variable transmission (2), with which a multi-stepped transmission is simulated, characterised by the following steps:

   - determining of a basic gear-change time (tg) depending on the change of the gear ratio and the gear-change direction (gg);
   - determining of a rev factor depending on the change of the input revs (ne(t)) of the transmission (2) resulting when the gear ratio is changed;
   - determining of a load factor depending on a load signal (alpha(t)) of the transmission (2) ;
   - determining of the gear-change time (ts) from the basic gear-change time (tg), the load factor and the rev factor.

2. A method according to claim 1, characterised in that the basic gear-change time (tg) is additionally determined depending on the driving condition (traction/overrun (zs(t))).

3. A method according to claim 2, characterised in that the basic gear-change time (tg) is selected so as to be shorter in the traction driving condition than in the overrun driving condition.

4. A device for implementing the method according to one of claims 1 to 3, characterised in that a programmable control device is provided with a program representing the method.

5. A device according to claim 4, characterised in that the program uses tables for correlating two variables with one another.

6. A device according to claim 4, characterised in that the program uses functional interrelationships for correlating two variables with one another.

**Revendications**

1. Procédé destiné à déterminer le temps de commutation (ts) pour un changement du rapport de transmission (ue) d'une transmission (2) à variation continue, au moyen de laquelle est simulée une transmission étagée, caractérisé par les étapes suivantes:

   - détermination d'un temps de commutation de base (tg) en fonction du changement du rapport de transmission et du sens de commutation (gg);

- détermination d'un facteur de vitesse de rotation en fonction de la variation de la vitesse de rotation d'entrée (ne(t)) de la transmission (2), survenant lors du changement du rapport de transmission;
- détermination d'un facteur de charge en fonction d'un signal de charge (alpha(t)) de la transmission (2);
- détermination du temps de commutation (ts) à partir du temps de commutation de base (tg), du facteur de charge et du facteur de vitesse de rotation.

2. Procédé selon la revendication 1, caractérisé en ce que le temps de commutation de base (tg) est déterminé en plus en fonction de l'état de marche (traction/poussée (zs(t))).

3. Procédé selon la revendication 2, caractérisé en ce que le temps de commutation de base (tg) est choisi plus court pour l'état de marche traction que pour l'état de marche poussée.

4. Dispositif pour la mise en oeuvre du procédé selon l'une des revendications 1 à 3, caractérisé en ce qu'un appareil de commande programmable est doté d'un programme représentant le procédé.

5. Dispositif selon la revendication 4, caractérisé en ce que le programme est utilisé pour la corrélation de deux grandeurs sous la forme de tableaux.

6. Dispositif selon la revendication 4, caractérisé en ce que le programme est utilisé pour la corrélation de deux grandeurs sous la forme de relations fonctionnelles.

FIG.1

FIG.2

START

$zs(t), alpha(t), ne(t), shr$ — 32

$Md = f(alpha(t))$

$gg = f(shr)$

$Delta\_n = f(gg), ne(t)$ — 33

$A(gg), B(gg), tg(gg)$ — 34

$ts = f(A(gg), B(gg), tg(gg))$ — 35

END

FIG.3